# EUROPEAN PATENT APPLICATION

(11) **EP 2 693 013 A1**
(43) Date of publication of application: **05.02.2014**
(21) Application number: 12765519.9
(22) Date of filing: 30.03.2012
(51) Int. Cl.: F01N 3/18, F01N 3/08, F01N 3/24

(54) **EXHAUST GAS PURIFICATION METHOD AND DEVICE**

(30) Priority: 30.03.2011 JP 2011074608
(71) Applicant: Hitachi Zosen Corporation, Osaka-shi, Osaka 559-8559 (JP)
(72) Inventor: HIKAZUDANI, Susumu, Osaka-shi Osaka 559-8559 (JP); SHIMIZU, Kana, Osaka-shi Osaka 559-8559 (JP)
(74) Representative: Albrecht, Ralf
(86) International application number: PCT/JP2012/058578
(87) International publication number: WO 2012/133764

(57) **Abstract**

Provided are a method for purifying an exhaust gas capable of performing a stable exhaust gas treatment consistently, and a device therefor. The exhaust gas purification method contains: subjecting a combustion exhaust gas containing NOx and SOx to a treatment for adsorbing and removing SOx with an SOx adsorbent; then adding a denitration reducing agent to the treated gas; and performing a denitration treatment with a denitration catalyst, in which plural SOx adsorption columns (7) and (8) for adsorbing and removing SOx with an SOx adsorbent are provided, and adsorption of SOx is performed in a part of the units, during which regeneration of the SOx adsorbent is performed in the other of the units, thereby performing adsorption of SOx and regeneration of the SOx adsorbent alternately.

## Description

### Technical Field

The present invention relates to a method for purifying a combustion exhaust gas of a marine engine or the like by removing a nitrogen oxide and a sulfur oxide therefrom, and a device therefor.

### Background Art

As a method for removing a nitrogen oxide (which may be hereinafter referred to as NOx) contained in a combustion exhaust gas, an ammonia SCR process has been known as a major method. The ammonia SCR process is a method for decomposing NOx to harmless N₂ and H₂O by adding ammonia as a reducing agent to an exhaust gas and then making them in contact with a denitration catalyst containing vanadium and titania as major components. The process has been practiced as a denitration device of a stationary electric power generation plant.

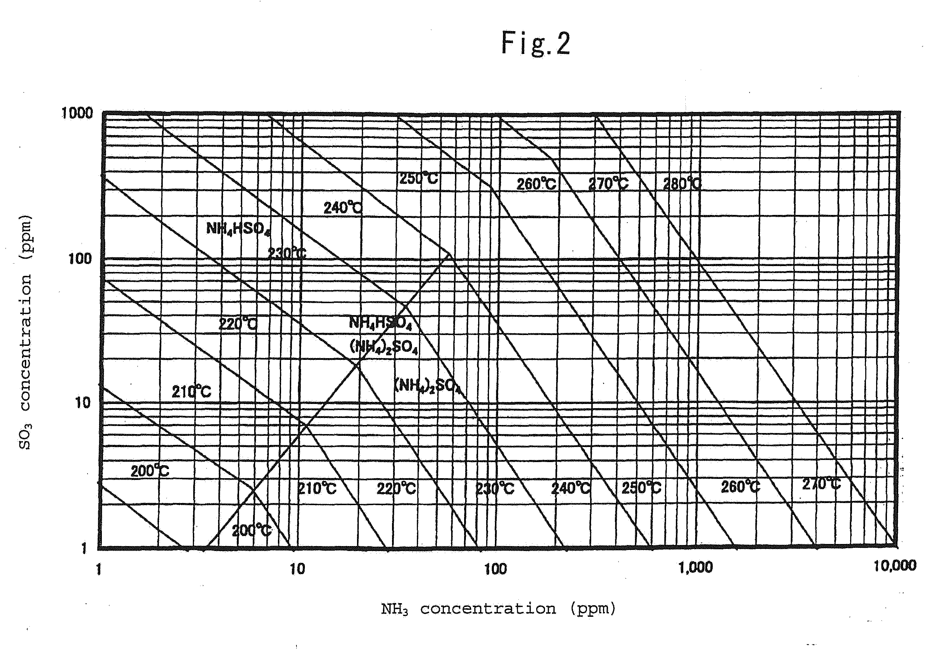

In the case where a fuel containing sulfur, such as heavy oil, is used, an exhaust gas therefrom contains a sulfur oxide (which may be hereinafter referred to as SOx) along with NOx. The operation temperature of the denitration device in the case where SOx is contained is necessarily higher than the precipitation temperature of ammonium sulfate for preventing precipitation of ammonium sulfate on the catalyst. The precipitation temperature of ammonium sulfate relates to the concentrations of SO₃ and NH₃ in the exhaust gas. The relationship is shown in Fig. 2. It is understood from Fig. 2 that when the concentrations of SO₃ and NH₃ are increased, the precipitation temperature of ammonium sulfate is increased.

In an exhaust gas of a coal boiler equipped with a stationary denitration device, in general, the SOx concentration is 100 ppm, and the SO₃ concentration is 10% thereof, i.e., 10 ppm. The NOx concentration is 500 ppm, and thus the concentration of NH₃ used as a reducing agent is up to 500 ppm. The precipitation temperature of ammonium sulfate under the condition is approximately 250°C. The exhaust gas temperature in this case is generally from 300 to 400°C, which is higher than 250°C, the precipitation temperature of ammonium sulfate, and thus ammonium sulfate is not precipitated, thereby maintaining the stable catalyst capability.

An exhaust gas of a marine engine or the like using C heavy oil as a fuel has a high SOx concentration of 1,000 ppm and a high NOx concentration of 1,000 ppm, which derive a high precipitation temperature of ammonium sulfate of approximately 280°C. The exhaust gas temperature is as low as 250°C, and thus ammonium sulfate is precipitated under the condition, thereby failing to maintain the stable catalyst capability.

For applying the ammonia SCR process to an exhaust gas of a marine engine or the like containing SOx and NOx in high concentrations and having a low exhaust gas temperature, the precipitation temperature of ammonium sulfate is necessarily lower than the exhaust gas temperature. The precipitation temperature of ammonium sulfate is determined by the SO₃ concentration and the NH₃ concentration, as shown in Fig. 2. The NH₃ concentration is determined by the NOx concentration in the exhaust gas and the target denitration rate and thus may not be lowered, but the SO₃ concentration may be lowered by providing a SOx adsorption column on the upstream side of the denitration device. In the case of an NOx concentration of 1,000 ppm and an exhaust gas temperature of 250°C, the maximum SO₃ concentration that prevents ammonium sulfate from being precipitated is approximately 2 ppm.

With respect to the exhaust gas treatment process, Patent Literature 1 discloses a dry desulfurization and denitration process, in which an exhaust gas containing SOx, NOx and a catalyst poisoning substance is treated with a desulfurization device using a carbonaceous adsorbent, to which ammonia is then added, and the treated gas is subjected to denitration by applying to a low temperature denitration device having a TiO₂-V₂O₅ catalyst charged therein.
Patent Literature 1: JP-A-07-299331

### Disclosure of Invention

### Technical Problem

An SOx adsorbent loses the SOx adsorbability after adsorbing a certain amount of SOx, and thus is necessarily subjected to a regeneration operation periodically. In Patent Literature 1, the replacement period of a carbonaceous adsorbent is to be prolonged by using a moving bed desulfurization reactor, in which the carbonaceous adsorbent moves downward, but when the adsorption capability is lowered, the adsorbent is necessarily replaced by terminating the combustion device on the upstream side, and therefore, there is still a concern about application to an exhaust gas treatment of a marine engine, which may be terminated only on stopping at a port.

The present invention has been made in consideration of the circumstances described above, and an object thereof is to provide a method for purifying an exhaust gas capable of performing a stable exhaust gas treatment consistently, and a device therefor.

### Solution to Problem

For solving the problem, the present invention relates to an exhaust gas purification method comprising: subjecting a combustion exhaust gas containing NOx and SOx to a treatment for adsorbing and removing SOx with an SOx adsorbent; then adding a denitration reducing agent to the treated gas; and performing a denitration treatment with a denitration catalyst, in which plural units for adsorbing and removing SOx with an SOx adsorbent are provided, and adsorption of SOx is performed in a part of the units, during which regeneration of the SOx adsorbent is performed in the other of the units, thereby performing adsorption of SOx and regeneration of the SOx adsorbent alternately.

The term NOx herein is a generic term of nitrogen oxides including nitric oxide (NO), nitrogen dioxide (NO₂), nitrous oxide (N₂O), dinitrogen trioxide (N₂O₃), dinitrogen tetroxide (N₂O₄) and dinitrogen pentoxide (N₂O₅).

The term SOx herein is generic term of sulfur oxides including sulfur monoxide (SO), disulfur trioxide (S₂O₃), sulfur dioxide (SO₂), sulfur trioxide (SO₃), disulfur heptoxide (S₂O₇) and sulfur tetroxide (SO₄).

A SOx adsorption column having a SOx adsorbent charged therein may be assumed as means for adsorbing and removing SOx with an SOx adsorbent. Examples of the SOx adsorbent include TiO₂, ZrO₂ and zeolite.

The regeneration of the SOx may be performed by heating to a temperature where SOx is desorbed, and in a marine engine, is preferably performed by rinsing with water. In this case, water for rinsing is preferably seawater, which is easily available.

In the method described above, after regenerating the SOx adsorbent, the SOx adsorbent is preferably dried for removing water that occupies sites for adsorbing SOx, before feeding the exhaust gas to means for adsorbing and removing SOx having the SOx adsorbent charged therein.

In this case, air heated through heat exchange with the exhaust gas is preferably used for drying the SOx adsorbent.

The use of the regeneration method provides such an advantage that the SOx adsorbent may be regenerated without a heating source separately provided.

The present invention also relates to an exhaust gas purification device for a marine engine comprising: a denitration reactor; a denitration reducing agent blowing port that is provided on an upstream side of the reactor; and SOx adsorption columns having an SOx adsorbent charged therein that are provided on the upstream side thereof, in which the plural SOx adsorption columns are provided in parallel, and the device further comprises: a seawater tank that stores seawater for rinsing the SOx adsorbent; a pump that feeds the seawater to the each of SOx adsorption columns; a valve that switches streams of the seawater and the exhaust gas; and a heat exchanger that heats air for drying the SOx adsorbent having been regenerated by rinsing with water, through heat exchange with the exhaust gas.

A device for pretreatment of seawater may be provided depending on necessity.

### Advantageous Effects of Invention

In the present invention, plural means for adsorbing and removing SOx with a SOx adsorbent are provided, and the adsorption of SOx is performed in a part of the means, during which the regeneration of the SOx adsorbent is performed in the other of the means, thereby performing the adsorption of SOx and the regeneration of the SOx adsorbent alternately. Consequently, the present invention may provide a method for purifying an exhaust gas capable of performing a stable exhaust gas treatment consistently, and a device therefor.

### Brief Description of Drawings

[Fig. 1] Fig. 1 is a flow chart showing an exhaust gas purification device according to the present invention.
[Fig. 2] Fig. 2 is a graph showing relationship of the concentrations of SO₃ and NH₃ for the precipitation temperatures of ammonium hydrogen sulfate and ammonium sulfate.

### Description of Embodiments

The exhaust gas purification method and device of the present invention will be described in detail below with reference to the drawings.

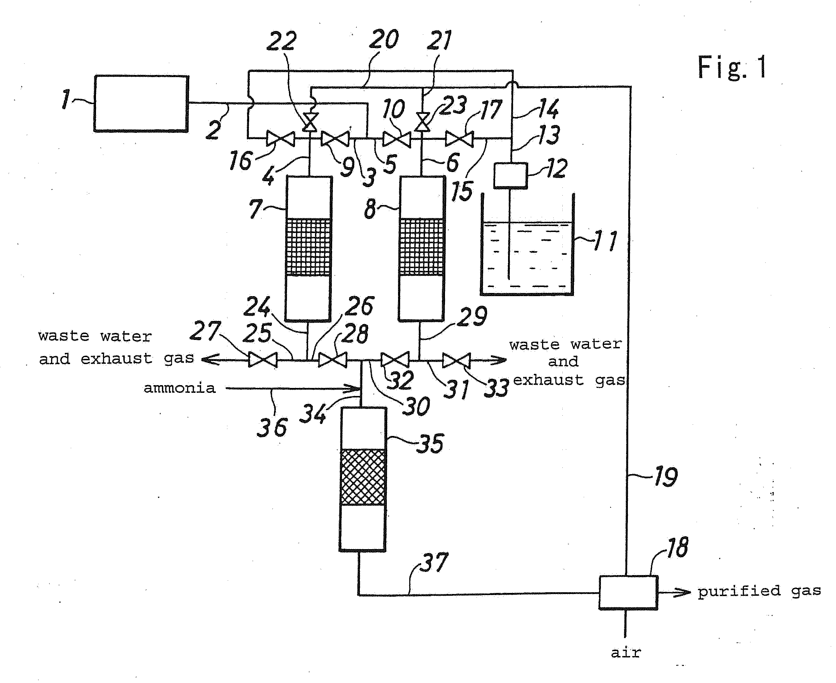

Fig. 1 is a flow chart showing an exhaust gas purification device according to the present invention.

An exhaust gas containing NOx and SOx discharged from a marine engine (1) is fed to a first SOx adsorption column (7) or a second SOx adsorption column (8) through a line (2) and lines (3) and (4) or lines (5) and (6), which are branched from the line (2). The sort of the exhaust gas to the first and second SOx adsorption columns (7) and (8) is controlled by opening and closing of valves (9) and (10) provided on the lines (3) and (5). Specifically, the exhaust gas is fed only to the first SOx adsorption column (7) by opening the valve (9) and closing the valve (10), and the exhaust gas is fed only to the second SOx adsorption column (8) by closing the valve (9) and opening the valve (10).

For regenerating SOx adsorbents in the first and second SOx adsorption columns (7) and (8), seawater for rinsing is fed to the SOx adsorption columns (7) and (8). The seawater stored in a seawater tank (11) is fed to the first SOx adsorption column (7) through a line (13) and lines (14) and (4) and fed to the second SOx adsorption column (8) through the line (13) and lines (15) and (6), by driving with a pump (12). Valves (16) and (17) for opening and closing the feed of the seawater are provided on the lines (14) and (15), respectively.

For drying the SOx adsorbents in the first and second SOx adsorption columns (7) and (8) after rinsing with seawater, heated air is fed to the SOx adsorption columns (7) and (8). The air is heated by heat exchange in a heat exchanger (18) with a purified gas after removing SOx and NOx, and then fed to the first SOx adsorption column (7) through a line (19) and lines (20) and (4) and fed to the second SOx adsorption column (8) through the line (19) and lines (21) and (6). Valves (22) and (23) for opening and closing the feed of the heated air are provided on the lines (20) and (21), respectively.

A SOx adsorbent is charged in the SOx adsorption columns (7) and (8). Examples of the SOx adsorbent include TiO₂, ZrO₂ and zeolite, and other materials may be used as far as the materials adsorb SOx. In the embodiment, TiO₂ is charged as the SOx adsorbent.

The exhaust gas, from which SOx has been removed, discharged from the lower end of the first SOx adsorption column (7) leaves the SOx adsorption column (7) through a line (24). The line (24) is branched to lines (25) and (26), and a valve (27) is provided on the line (25), whereas a valve (28) is provided on the line (26).

The exhaust gas, from which SOx has been removed, discharged from the lower end of the second SOx adsorption column (8) leaves the SOx adsorption column (8) through a line (29). The line (29) is branched to lines (30) and (31), and a valve (32) is provided on the line (30), whereas a valve (33) is provided on the line (31).

The lines (26) and (30) are merged into a line (34), and the exhaust gas flowing in the line (34) is fed to a denitration reactor (35).

Ammonia is fed to the line (34) through a line (36).

Examples of a denitration catalyst charged in the denitration reactor (35) include TiO₂ having vanadium supported thereon and one having tungsten or molybdenum supported thereon, and other materials may be used as far as the materials reduce NOx. In the embodiment, TiO₂ having vanadium and tungsten as denitration catalysts supported thereon is charged.

The purified gas having been treated for SOx and NOx leaving the denitration reactor (35) is fed to the heat exchanger (18) through a line (37) and cooled by heat exchange herein, followed by being discharged to the exterior.

An exhaust gas treating method by using the aforementioned device will be described.

The exhaust gas containing SOx and NOx discharged from the marine engine (1) is fed to one of the first SOx adsorption column (7) and the second SOx adsorption column (8).

The first SOx adsorption column (7) and the second SOx adsorption column (8) are used alternately, and specifically, the adsorption of SOx is performed in one of them, during which the regeneration of the SOx adsorbent is performed in the other of them.

In the case where the adsorption of SOx is performed in the first SOx adsorption column (7) and the regeneration of the SOx adsorbent is performed in the second SOx adsorption column (8), the exhaust gas is fed only to the first SOx adsorption column (7) by opening the valve (9) and closing the valve (10). In this operation, the valves (16) and (22) for the first SOx adsorption column (7) are closed.

The exhaust gas, from which SOx has been removed with the SOx adsorbent in the first SOx adsorption column (7), is fed to the denitration reactor (35) as the valve (28) on the line (26) is opened, and the valve (27) on the line (25) is closed.

For regenerating the second SOx adsorption column (8), the valves (10) and (23) are closed, whereas the valve (17) is opened, and thereby seawater drawn with the operation of the pump (12) from the seawater tank (11) is fed to the second SOx adsorption column (8) through the lines (13), (15) and (16), for removing SOx from the SOx adsorbent in the second SOx adsorption column (8) by rinsing with water.

Waste water containing SOx is discharged from the lower end of the second SOx adsorption column (8) through the line (29), and as the valve (32) on the line (30) is closed, and the valve (33) on the line (31) is opened, the waste water is discharged through the line (31) to the exterior of the exhaust gas purification device, subjected to a desulfurization treatment with means for desulfurization, which is not shown in the figure, and then discharged to the exterior.

The second SOx adsorption column (8), from which SOx has been removed by rinsing with water, is then dried. At this time, the valves (10) and (17) are closed, the valve (23) is opened, and thereby air is introduced thereto through the lines (19), (21) and (6). The air is heated air having been heated with the heat exchanger (18), and after passing through the second SOx adsorption column (8), is discharged through the lines (29) and (31).

After the lapse of a prescribed period of time, the first SOx adsorption column (7) is switched to the regeneration process, and the second SOx adsorption column (8) is switched to the adsorption process. The detail description of the operations herein is omitted since the operations may be performed in the same manners as in the SOx adsorption process in the first SOx adsorption column (7) and the regeneration process in the second SOx adsorption column (8).

Ammonia is introduced to the exhaust gas, from which SOx has been removed in the first and second SOx adsorption columns (7) and (8), through the line (36), and the exhaust gas is fed to the denitration reactor (35) and subjected herein to the reduction process of NOx.

The purified gas having been processed is heated by the denitration reaction, which is exothermic reaction, and thus the purified gas is fed to the heat exchanger (18) through the line (37) and cooled by heat exchange herein with the air used for drying the SOx adsorption columns, followed by being discharged to the exterior.

The embodiment where two SOx adsorption columns (7) and (8) are provided has been described as an example, but cases where three of more SOx adsorption columns are provided may be used similarly and are encompassed by the present invention.

An example where the present invention is practiced concretely will be described below.

### Example 1

An exhaust gas purification process was performed by using a test device shown in Fig. 1, and the changes in denitration rate on performing the regeneration of the SOx adsorbents periodically were measured.

The SOx adsorbent used was TiO₂, and the denitration catalyst used was TiO₂ having vanadium and tungsten supported thereon. The SOx adsorbent and the denitration catalyst were charged in the SOx adsorption columns and the denitration reactor, respectively, to an amount that provided a space velocity SV of 10,000 (1/h), and the SOx adsorption column temperature was set to 250°C, whereas the denitration reactor temperature was set to 220°C. The liquid used for regenerating the SOx adsorbent by rinsing with water was seawater. After rinsing with water, the SOx adsorbent was dried with air at 160°C.

The gas to be introduced to the SOx adsorption columns had a composition of 1,000 ppm of NO, 1,000 ppm of SOx, 10% of H₂O and the balance of air. The ratio of NH₃ added to the gas to NO, NH₃/NO, was 0.8. The switching operation of the gas fed to the SOx adsorption columns was performed every one hour, and the initial denitration rate and the denitration rate after 24 hours were measured.

### Comparative Example 1

The same procedures were performed as in Example 1 except that in the test device shown in Fig. 1, the switching operation of the gas fed to the SOx adsorption columns was not performed, but the operation was performed only with one of the SOx adsorption columns (without the regeneration of the SOx adsorbent).

### Results

The initial denitration rates (immediately after starting the test) and the denitration rates after 24 hours are shown in Table 1.

**Table 1: Test Results**

| | Denitration rate (%) | |
|---|---|---|
| | Initial | After 24 hours |
| Example 1 | 79.6 | 79.6 |
| Comparative Example 1 | 79.6 | 71.8 |

It is understood that the denitration capability equivalent to the initial stage is obtained after 24 hours in Example 1, but the denitration capability is largely deteriorated after 24 hours in Comparative Example 1.

The deterioration of the denitration capability occurs due to the precipitation of ammonium sulfate on the surface of the denitration catalyst, and the precipitation of ammonium sulfate on the denitration catalyst is prevented by the present invention, thereby providing the stable denitration capability consistently.

### Description of Symbols

- 7, 8: SOx adsorption column
- 35: denitration reactor

## Claims

1. An exhaust gas purification method comprising: subjecting a combustion exhaust gas containing NOx and SOx to a treatment for adsorbing and removing SOx with an SOx adsorbent; then adding a denitration reducing agent to the treated gas; and performing a denitration treatment with a denitration catalyst,
in which plural means for adsorbing and removing SOx with an SOx adsorbent are provided, and adsorption of SOx is performed in a part of the means, during which regeneration of the SOx adsorbent is performed in the other of the means, thereby performing adsorption of SOx and regeneration of the SOx adsorbent alternately.

2. The exhaust gas purification method according to claim 1, wherein the regeneration of the SOx adsorbent is performed by rinsing with water.

3. The exhaust gas purification method according to claim 2, wherein the rinsing with water is performed with seawater.

4. The exhaust gas purification method according to claim 2 or 3, wherein after regenerating the SOx adsorbent, the SOx adsorbent is dried before feeding the exhaust gas to the unit for adsorbing and removing SOx having the SOx adsorbent charged therein.

5. The exhaust gas purification method according to claim 4, wherein air heated through heat exchange with the exhaust gas is used for drying.

6. An exhaust gas purification device for a marine engine comprising: a denitration reactor; a denitration reducing agent blowing port that is provided on an upstream side of the reactor; and SOx adsorption columns having an SOx adsorbent charged therein that are provided on the upstream side thereof,
in which the plural SOx adsorption columns are provided in parallel, and
the device further contains: a seawater tank that stores seawater for rinsing the SOx adsorbent; a pump that feeds the seawater to the SOx adsorption columns; a valve that switches streams of the seawater and the exhaust gas; and a heat exchanger that heats air for drying the SOx adsorbent having been regenerated by rinsing with water, through heat exchange with the exhaust gas.
